# EUROPÄISCHE PATENTANMELDUNG

(11) **EP 1 318 228 A1**
(43) Veröffentlichungstag der Anmeldung: **11.06.2003**
(21) Anmeldenummer: 02026159.0
(22) Anmeldetag: 25.11.2002
(51) Int. Cl.: D06M 23/00, D06M 23/10, D06M 11/79, D06M 11/45

(54) **Verfahren zur Herstellung von Gegenständen mit antiallergischen Oberflächen**

(30) Priorität: 05.12.2001 DE 10159767
(71) Anmelder: Creavis Gesellschaft für Technologie und Innovation mbH, 45772 Marl (DE)
(72) Erfinder: Oles, Markus, Dr., 45525 Hattingen (DE); Nun, Edwin, Dr., 48727 Billerbeck (DE); Pauli, Ingo, Dr., Alabama 36693 Mobile (US)

(57) **Zusammenfassung**

Die vorliegende Erfindungsmeldung beschreibt ein Verfahren zur Herstellung antiallergischen Oberflächen sowie Gegenstände die diese antiallergischen Oberflächen aufweisen.

Mittels des erfindungsgemäßen Verfahrens werden antiallergische Oberflächen hergestellt. Die antiallergische Wirkung beruht darauf, dass auf diesen Oberflächen auf Grund von selbstreinigenden Eigenschaften, allergene Stoffe sich nicht oder nur schwer ablagern können und durch einen einfachen Reinigungsvorgang mit bewegtem Wasser von der Oberfläche entfernt werden können. Die Oberflächen können sowohl textile Oberflächen als auch Polymeroberflächen sein. Auf diese Oberflächen werden Strukturen aus Erhebungen und Vertiefungen aufgebracht, wie sie bereits mehrfach beschrieben wurden. Das Aufbringen der erfindungsgemäßen Beschichtungen kann auf sehr einfache Weise erfolgen, in dem eine Dispersion aus geeigneten Partikeln in einem Lösemittel auf die betreffende Oberfläche aufgebracht und das Lösemittel anschließend entfernt wird.

Mit den erfindungsgemäßen antiallergischen Oberflächen können z. B. Textilien, Matratzen oder Decken ausgerüstet werden.

## Beschreibung

Gegenstand der vorliegenden Erfindung ist ein Verfahren zur Herstellung von antiallergischen Oberflächen, wobei die antiallergischen Eigenschaften durch eine Beschichtung mit Kieselsäurepartikeln erzielt wird.

Ca. 15 % der Bevölkerung in Deutschland ist allergisch gegen Hausstaub. Hausstauballergiker reagieren allerdings nicht wirklich auf Staub sondern auf die in dem Staub vorhandenen Allergene, die mit dem Staub z. B. über die Atmung aufgenommen werden. Typische Allergene sind z. B. Gräser- und Blütenpollen. Einen weiteren großen Anteil an der Hausstauballergie haben die Hausstaubmilben, da viele Menschen auf deren Kot bzw. Bestandteile des selbigen allergisch reagieren. Die Milben finden sich an vielen Stellen im Haus, so z. B. in Matratzen, Kissen, Decken oder dicken Teppichen. Als Nahrung dienen den Milben organische Partikel, insbesondere menschliche und tierische Hautschuppen.

Zur Reduzierung der Milben werden heute eine Vielzahl von verschiedenen Techniken angewendet. Neben dem feuchten Wischen oder Waschen von kontaminierten Oberflächen hilft temporär auch ein intensives Absaugen der Oberflächen, wobei Staubsauger verwendet werden sollten, die eine hohe Saugleistung und einen Partikelfilter für die Abluft aufweisen. Insbesondere bei Teppichen, Fellen oder Bettvorlegern wird die Technik des Absaugens häufig angewandt, ohne jedoch nachhaltige Ergebnisse zu erzielen, da eine vollständige Reinigung in der Regel nicht möglich ist.

Aus vielen Anmeldungen sind selbstreinigende Oberflächen, die durch bewegtes Wasser gereinigt werden können, bekannt. Der Vorteil dieser Oberflächen besteht darin, dass bereits geringe Mengen Wasser ausreichend sind, um die Oberflächen vollständig von Staub und anderen Verunreinigungen zu befreien. Keine dieser Anmeldungen beschreibt die Herstellung von Gegenständen mit antiallergischen Oberflächen.

Aufgabe der vorliegenden Erfindung war es deshalb Gegenstände, insbesondere Textilien bereitzustellen, die einfach und schnell von abgelagerten, allergenen Stoffen befreit werden können und damit antiallergische Eigenschaften aufweisen.

Es konnte nun überraschenderweise festgestellt werden, dass sich in Textilien, die selbstreinigende Oberflächen aufweisen, nach einer Behandlung mit Wasser, z. B. durch Waschen oder durch Behandlung mit einem Nasssauger, deutlich weniger Milben ansiedeln bzw. aufhalten als in herkömmlichen Textilien. Dies liegt vermutlich daran, dass die Staubpartikel, insbesondere organische Staubpartikel, die den Milben als Nahrung dienen, durch die Behandlung mit Wasser nahezu vollständig aus den selbstreinigende Oberflächen aufweisenden Textilien entfernt werden. Es konnte außerdem festgestellt werden, dass sich auf den Gegenständen, die selbstreinigende Oberflächen aufweisen, deutlich weniger allergene Stoffe dauerhaft anlagern.

Gegenstand der vorliegendenden Erfindung ist deshalb ein Verfahren zur Herstellung von Gegenständen mit antiallergischen Oberflächen, welches dadurch gekennzeichnet ist, dass die Gegenstände mit einer selbstreinigenden Oberfläche aus Erhebungen und/oder Vertiefungen ausgerüstet werden, wobei die Erhebungen einen Abstand von 20 nm bis 100 µm und eine Höhe von 20 nm bis 100 µm aufweisen.

Ebenso Gegenstand der vorliegenden Erfindung ist die Verwendung des erfindungsgemäßen Verfahrens zur Herstellung von antiallergischen Oberflächen bei Teppichböden, Schutzfolien für Möbel, Matratzen, Federbetten, Tapeten, Schutzbezüge oder Decken.

Außerdem sind Gegenstand der vorliegenden Erfindung Gegenstände, insbesondere Teppichböden, Schutzfolien für Möbel, Matratzen, Federbetten, Tapeten, Schutzbezüge, Decken und Textilien, welche dadurch gekennzeichnet sind, dass sie eine antiallergische Oberfläche, hergestellt nach dem erfindungsgemäßen Verfahren aufweisen.

Das erfindungsgemäße Verfahren hat den Vorteil, dass es sehr einfach durchzuführen ist. Je nach Ausführungsart des erfindungsgemäßen Verfahrens werden dauerhafte oder vorübergehende antiallergische Oberflächen mit selbstreinigenden Eigenschaften bereitgestellt, von denen allergene Stoffe durch bewegtes Wasser entfernt werden können.

Da ein großer Anteil an der Hausstauballergie auf die Hausstaubmilben zurückzuführen ist, auf deren Kot bzw. Bestandteile des selbigen viele Menschen allergisch reagieren, ist es auch vorteilhaft, dass an den Oberflächen der erfindungsgemäß hergestellten Gegenstände kaum organische Partikel, insbesondere menschliche und tierische Hautschuppen anhaften, da diese den Milben als Nahrung dienen. Besonders vorteilhaft ist es deshalb Gegenstände im häuslichen Bereich, wie z. B. Matratzen, Kissen, Decken oder dicke Teppiche mit den antiallergischen Oberflächen auszurüsten.

Das erfindungsgemäße Verfahren zur Herstellung von Gegenständen mit antiallergischen Oberflächen werden nachfolgend beispielhaft beschrieben, ohne dass die Erfindung auf diese beschränkt sein soll. Das Verfahren basiert auf der Verwendung des Selbstreinigungseffektes bei Gegenständen, bei denen antiallergische Wirkungen erwünscht sind.

Das erfindungsgemäße Verfahren zur Herstellung von Gegenständen mit antiallergischen Oberflächen, zeichnet sich deshalb dadurch aus, dass die Gegenstände mit einer selbstreinigenden Oberfläche aus Erhebungen und/oder Vertiefungen ausgerüstet werden, wobei die Erhebungen einen Abstand von 20 nm bis 100 µm und eine Höhe von 20 nm bis 100 µm aufweisen.

Die Gegenstände können z. B. ausgewählt sein aus Folien, Tapeten oder Fasern aufweisenden Gegenständen. Bevorzugte Fasern aufweisende Gegenstände sind Gewirke, Gewebe, Vliese oder Filze aufweisende Gegenstände. Besonders bevorzugt sind die Fasern aufweisenden Gegenstände ausgewählt aus Polstern, Teppichen, Teppichböden, Matratzen, Federbetten, Schutzbezügen, Decken, Industrietextilien oder Kleidungsstücken. Insbesondere sind Gegenstände mit antiallergischen Oberflächen solche Gegenstände, die in direktem Kontakt mir dem Menschen und/oder Tieren, insbesondere Vögeln oder Säugetieren stehen. Ganz besonders bevorzugt werden mit dem erfindungsgemäßen Verfahren Gegenstände mit antiallergischen Oberflächen hergestellt, die in direktem Kontakt mit Menschen und Tieren stehen, da bei solchen Gegenständen die Gefahr der Weitergabe allergener Stoffe von einem Individuum auf ein anderes besonders hoch ist. Besonders gute selbstreinigende Eigenschaften werden erzielt, wenn die Oberflächenstruktur hydrophobe Erhebungen mit einer Höhe von 50 nm bis 20 µm, vorzugsweise von 500 nm bis 10 µm und ganz besonders bevorzugt von 0,1 bis 5 µm und einem Abstand kleiner 100 µm, vorzugsweise einen Abstand von 50 nm bis 75 µm und ganz besonders bevorzugt von 500 nm bis 5 µm aufweisen. Besonders gute antiallergische Eigenschaften in Bezug auf Pollen weisen Oberflächenstrukturen auf, die hydrophobe Erhebungen mit einer Höhe von 30 µm bis 1 µm in einem Abstand der Erhebungen von ebenfalls 30 µm bis 1 µm aufweisen, da solche Strukturen klein genug sind, um ein Eindringen der Pollen zwischen die Erhebungen und ein physikalische oder chemisches Festsetzen zwischen den Erhebungen zu verhindern bzw. zu reduzieren.

Die Oberflächenstruktur kann auf der Oberfläche der Gegenstände selbst erzeugt werden. Dies kann z. B. dadurch erfolgen, daß durch Aufbringen und Fixieren von Partikeln auf der Oberfläche der Gegenstände eine Oberflächenstruktur erzeugt wird. Das Aufbringen und Fixieren der Partikel kann durch Kleben, Einprägen, Einwalzen oder Einlagern an bzw. in die Oberfläche der Gegenstände erfolgen. Verschiedene neuere Fixierungs- bzw. Prägemethoden, die hier nicht näher ausgeführt werden sollen, finden sich unter anderem in den Patentanmeldungen DE 10129116, DE 10138036 und DE 10134477 beschrieben.

### Mögliche Methoden sind zum Beispiel:

Während des Spinnprozesses werden die Partikel bei der Herstellung von Fasern nach Austritt der Polymerschmelze aus der Spinndüse mittels eines Gasstromes in die Oberfläche des Polymeren eingebracht (DE 10129116). Die Partikel werden durch Erstarren der Polymeren an den polymeren Fasern fixiert. Dem Fachmann ergeben sich leicht ähnliche Fixierungsmethoden, bei denen die Partikel in eine viskose Oberfläche eingebracht oder auf eine viskose Oberfläche aufgebracht werden, und die viskose Oberfläche durch Abkühlen, Verdampfen von Lösemittel oder durch chemische Reaktion, erstarrt.

Ein weiteres Verfahren, wie es in DE 10134477 beschrieben wird, zur Herstellung von selbstreinigenden Oberflächen mit selbstregenerierendem Selbstreinigungseffekt, bei dem eine geeignete, zumindest teilweise hydrophobe Oberflächenstruktur durch Fixieren von Partikeln mittels eines Trägers auf einer Oberfläche geschaffen wird, basiert auf der Verwendung eines Gemisches aus Partikeln und Binder. Natürlich ist auch der Einsatz eines Trägers der keine Partikel enthält denkbar, was dann einem normalen Aufklebeprozess entspricht.

Als Partikel können Partikel eingesetzt werden, die zumindest ein Material, ausgewählt aus Silikaten, dotierten oder pyrogenen Silikaten, Mineralien, Metalloxiden, Kieselsäuren. Metallen oder Polymeren aufweisen. Vorzugsweise werden Partikel eingesetzt, die einen Partikeldurchmesser von 0,02 bis 100 µm, besonders bevorzugt von 0,03 bis 50 µm und ganz besonders bevorzugt von 0,03 bis 1 µm aufweisen. Diese Partikelgröße ist deshalb vorteilhaft, weil sie kleiner ist, als die übliche Partikelgröße von Pollen und damit eine bessere selbstreinigende Wirkung von solchen Oberflächen erzielt wird. Die erfindungsgemäßen Gegenstände weisen vorzugsweise Oberflächen auf, bei denen die einzelnen Partikel auf der Oberfläche in Abständen von 0 bis 10 Partikeldurchmesser, insbesondere von 4 bis 8 oder 1 bis 3 Partikeldurchmesser, vorhanden sind.

Die Partikel können auch als Aggregate oder Agglomerate vorliegen, wobei gemäß DIN 53 206 unter Aggregaten flächig oder kantenförmig aneinander gelagerte Primärteilchen (Partikel) und unter Agglomeraten punktförmig aneinander gelagerte Primärteilchen (Partikel) verstanden werden. Als Partikel können auch solche eingesetzt werden, die sich aus Primärteilchen zu Agglomeraten oder Aggregaten mit einer Größe von 0,2 bis 100 µm zusammenlagern.

Es kann vorteilhaft sein, wenn die eingesetzten Partikel eine strukturierte Oberfläche haben. Vorzugsweise werden Partikel, die eine unregelmäßige Feinstruktur im Nanometerbereich auf der Oberfläche aufweisen, eingesetzt. Die Feinstruktur der Partikel ist vorzugsweise eine zerklüftete Struktur mit Erhebungen und/oder Vertiefungen im Nanometerbereich. Vorzugsweise weisen die Erhöhungen im Mittel eine Höhe von 20 bis 500 nm, besonders bevorzugt von 50 bis 200 nm auf. Der Abstand der Erhöhungen bzw. Vertiefungen auf den Partikeln beträgt vorzugsweise weniger als 500 nm, ganz besonders bevorzugt weniger als 200 nm.

Als Partikel, insbesondere als Partikel, die eine unregelmäßige Feinstruktur im Nanometerbereich an der Oberfläche aufweisen, werden vorzugsweise solche Partikel eingesetzt, die zumindest eine Verbindung, ausgewählt aus pyrogener Kieselsäure, Aluminiumoxid, Siliziumoxid, pyrogenen Silikaten oder pulverförmigen Polymeren oder Metallen aufweisen. Es kann vorteilhaft sein, wenn die eingesetzten Partikel hydrophobe Eigenschaften aufweisen. Ganz besonders eignen sich als Partikel unter anderem hydrophobierte pyrogene Kieselsäuren, so genannte Aerosile.

Es kann vorteilhaft sein, wenn die Oberflächen Partikel aufweisen, die hydrophobe Eigenschaften aufweisen. Die hydrophoben Eigenschaften der Partikel können durch das verwendete Material der Partikel inhärent vorhanden sein. Es können aber auch hydrophobierte Partikel eingesetzt werden, die z. B. durch eine Behandlung mit zumindest einer Verbindung aus der Gruppe der Alkylsilane, Perfluoralkylsilane, Paraffine, Wachse, Fettsäureestern, funktionalisierte langkettige Alkanderivate oder Alkyldisilazane, hydrophobe Eigenschaften aufweisen.

In einer weiteren Ausführungsform des erfindungsgemäßen Verfahrens wird die Oberflächenstruktur als eine Folie oder auf einer Folie erzeugt, die auf die Oberfläche des Gegenstandes der mit einer antiallergischen Oberfläche ausgerüstet werden soll, übertragen wird. Die Herstellung solcher Folien wird z. B. in EP 0 933 388 oder spezieller in DE 10138036 beschrieben. Die in DE 10138036 beschriebenen strukturierten Oberflächen, deren Struktur von Erhebungen gebildet wird, zeichnen sich dadurch aus, dass benachbarte Erhebungen durch Grate verbunden sind, die eine geringere mittlere Höhe als die durch sie verbundenen Erhebungen aufweisen. In DE 10138036 wird z. B. ein Verfahren zur Herstellung von strukturierten Oberflächen durch Abformen einer Negativform auf eine unstrukturierte Oberfläche, bei welchem die Negativform eine Oberfläche aus Teilen von Kugeln oder abgerundeten Pyramidenstümpfen und zwischen den Kugelteilen talförmige Einschnitte aufweist. Durch die die Erhebungen verbindenden Grate wird eine deutlich höhere Stabilität der Strukturen erreicht. Auch jede andere Negativform, mit der Erhebungen der geforderten Dimension hergestellt werden können, sind einsetzbar. Das Abprägen kann durch Prägen oder Walzen oder beim makroskopischen Formen der Gegenstände durch Gießen, Spritzgießen oder In Mold Decoration (IMD) auf die Oberfläche erfolgen.

Es kann vorteilhaft sein, die Oberflächen, die mit der Oberflächenstruktur ausgestattet worden sind, nachträglich nochmals zu hydrophobieren. Dies kann durch die Behandlung der Oberflächen mit den für die Hydrophobierung der Partikel angegebenen Verbindungen erfolgen.

Besonders bevorzugt wird die selbstreinigende Oberfläche durch Aufbringen einer Suspension, die Partikel in einem Lösemittel aufweist, und anschließendes Entfernen des Lösemittels aufgebracht. Das Aufbringen der Suspension auf zumindest eine Oberfläche eines Gegenstandes kann z. B. durch Tauchen des Gegenstandes in die Suspension oder durch Besprühen, Aufsprühen, Bestreichen oder Aufrakeln der Suspension auf den Gegenstand bzw. zumindest eine Oberfläche des Gegenstandes erfolgen.

Es kann vorteilhaft sein, wenn die Oberfläche des Gegenstandes durch das Lösemittel nicht angelöst wird, und nach dem Entfernen des Lösemittels die Partikel an der Oberfläche des Gegenstandes haften. Bei dieser Ausführungsart des erfindungsgemäßen Verfahrens wird als Lösemittel zumindest eine geeignete Verbindung, die die Oberfläche des zu behandelnden Gegenstands nicht anlöst, aus der Gruppe der Alkohole, der Glykole, der Ether, der Glykolether, der Ketone, der Ester, der Amide, der Nitro-Verbindungen, der Halogenkohlenwasserstoffe, der aliphatischen und aromatischen Kohlenwasserstoffe oder eine Mischung davon eingesetzt.

Ebenso vorteilhaft kann es sein, wenn die Oberfläche des Gegenstandes durch das Lösemittel angelöst wird, und nach dem Entfernen des Lösemittels die Beschichtung in der Oberfläche des Gegenstandes verankert ist. Diese Ausführungsart des erfindungsgemäßen Verfahrens wird vorzugsweise mit Gegenständen durchgeführt, die eine Oberfläche aufweist, die von einem Lösemittel angelöst wird und die vorzugsweise Polymere auf der Basis von Polycarbonaten, Poly(meth)acrylaten, Polyamiden, PVC, Polyethylenen, Polypropylenen, aliphatischen linearen- oder verzweigten Alkenen, cyclischen Alkenen, Polystyrolen, Polyestern, Polyethersulfonen, Polyacrylnitril oder Polyalkylenterephthalaten, sowie deren Gemische oder Copolymere, aufweist. Als geeignete Lösemittel wird bevorzugt zumindest eine als Lösemittel für die entsprechende Oberfläche geeignete Verbindung aus der Gruppe der Alkohole, der Glykole, der Ether, der Glykolether, der Ketone, der Ester, der Amide, der Nitro-Verbindungen, der Halogenkohlenwasserstoffe, der aliphatischen und aromatischen Kohlenwasserstoffe oder Mischungen davon eingesetzt. Ganz besonderes bevorzugt wird als Lösemittel zumindest eine als Lösemittel für die entsprechende Oberfläche geeignete Verbindung ausgewählt aus Methanol, Ethanol, Propanol, Butanol, Octanol, Cyclohexanol, Phenol, Kresol, Ethylenglykol, Diethylenglykol, Diethylether, Dibutylether, Anisol, Dioxan, Dioxolan, Tetrahydrofuran, Monoethylenglykolether, Diethylenglykolether, Triethylenglykolether, Polyethylenglykolether, Aceton, Butanon, Cyclohexanon, Ethylacetat, Butylacetat, Iso-Amylacetat, Ethylhexylacetat, Glykolester, Dimethylformamid, Pyridin, N-Methylpyrrolidon, N-Methylcaprolacton, Acetonitril, Schwefelkohlenstoff, Dimethylsulfoxid, Sulfolan, Nitrobenzol, Dichlormethan, Chloroform, Tetrachlormethan, Trichlorethen, Tetrachlorethen, 1,2-Dichlorethan, Chlorphenol, Chlorfluorkohlenwasserstoffe, Benzine, Petrolether, Cyclohexan, Methylcyclohexan, Decalin, Tetralin, Terpene, Benzol, Toluol oder Xylol oder Mischungen davon eingesetzt.

Bei den erfindungsgemäßen Verfahren, bei denen Lösemittel, welche Partikel aufweisen, auf die Oberfläche von Gegenständen aufgebracht werden, weist das Lösemittel vor dem Aufbringen auf die Oberfläche vorzugsweise eine Temperatur von - 30 °C bis 300 °C, bevorzugt 25 bis 100 °C, auf.

Das erfindungsgemäße Verfahren kann zur Herstellung von antiallergischen Oberflächen bei Teppichböden, Schutzfolien für Möbel, Matratzen, Federbetten, Tapeten, Schutzbezüge, Vorhänge, Gardinen, Bettbezüge oder Decken verwendet werden. Dabei können die genannten Gegenstände sowohl nachträglich mit antiallergischen Oberflächen ausgerüstet werden als auch durch Verwendung von entsprechend ausgerüsteten Gegenständen bei der Herstellung, z. B. durch die Verwendung von Fasern oder Stoffen, die selbstreinigende Eigenschaften aufweisen, erhalten werden.

Insbesondere Teppichböden, Schutzfolien für Möbel, Matratzen, Federbetten, Tapeten, Schutzbezüge, Decken, Textilien und insbesondere Kleidungsstücke, die eine antiallergische Oberfläche, hergestellt nach dem erfindungsgemäßen Verfahren, aufweisen, sind vom Gegenstand der Erfindung umfasst.

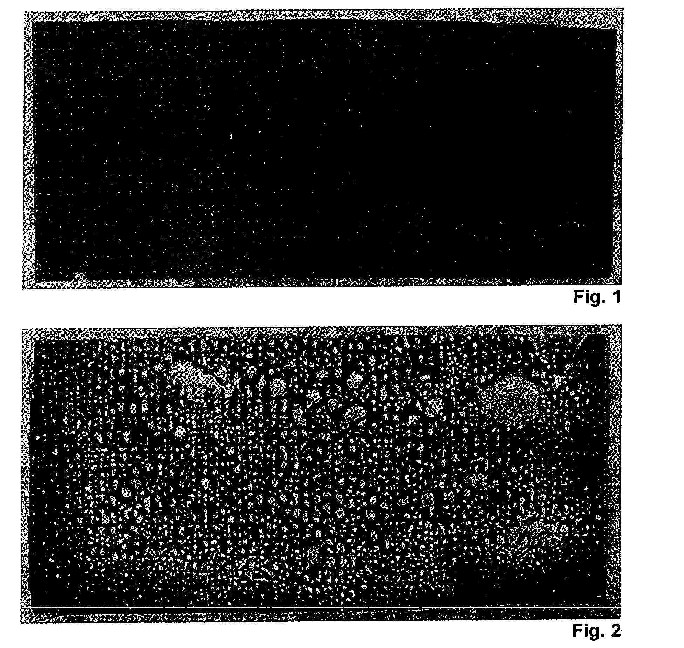

Das erfindungsgemäße Verfahren bzw. Gegenstände, die mit diesem Verfahren hergestellt wurden, werden an Hand der Abbildungen Fig. 1 und Fig. 2 näher erläutert, ohne dass die Erfindung auf diese Ausführungen beschränkt sein soll.

Fig.1 zeigt eine Aufnahme eines erfindungsgemäß behandelten Polyethylen-Gewebes gemäß Beispiel 1. Es ist zu erkennen, dass kaum Pollen auf dem Gewebe zurückgeblieben sind.

Fig. 2 zeigt zum Vergleich ein nicht erfindungsgemäß behandeltes Polyethylen-Gewebe, welches auch nach dem Besprühen mit Wasser gemäß Beispiel 1 eine starke Verschmutzung mit Pollen aufweist.

Das erfindungsgemäße Verfahren wird im folgenden Beispiel beispielhaft beschrieben, ohne dass die Erfindung darauf beschränkt sein soll.

### Beispiel 1:

Eine handelsübliche Textilie aus Polyethylen-Faser wird in zwei Hälften geteilt. Eine Hälfte wird in eine auf 80 °C erhitzte Suspension aus Decalin und 1 Gew.-% Aerosil R8200 (Degussa AG) getaucht. Nach einer Kontaktzeit von 30 Sekunden wird die Textilie aus der Suspension genommen und bei Raumtemperatur getrocknet. Nach einer Trockenzeit von 5 Stunden wurden die Textilienhälften mit Pollen der Pflanze Cedrus atlantica (Atlas-Zedarpollen) (Gelb) besprüht und anschließend mit destilliertem Wasser besprüht, wobei die Textilien in einem Winkel von 45 ° aufgespannt waren. Es wurde festgestellt, dass die erfindungsgemäße Textilienhälfte nur noch geringste Mengen der ursprünglich aufgetragenen Pollen aufwies (Fig. 1). Die unbehandelte Textilienhälfte wies dagegen noch 65 % der ursprünglich aufgetragenen Pollen auf (Fig. 2).

## Patentansprüche

1. Verfahren zur Herstellung von Gegenständen mit antiallergischen Oberflächen,
**dadurch gekennzeichnet,**
**dass** die Gegenstände mit einer selbstreinigenden Oberfläche aus Erhebungen und/oder Vertiefungen ausgerüstet werden, wobei die Erhebungen einen Abstand von 20 nm bis 100 µm und eine Höhe von 20 nm bis 100 µm aufweisen.

2. Verfahren gemäß Anspruch 1,
**dadurch gekennzeichnet,**
**dass** die Gegenstände ausgewählt sind aus Folien, Tapeten oder Fasern aufweisenden Gegenständen.

3. Verfahren gemäß Anspruch 2,
**dadurch gekennzeichnet,**
**dass** die Fasern aufweisenden Gegenstände Gewirke, Gewebe, Vliese oder Filze aufweisen.

4. Verfahren gemäß Anspruch 2 oder 3,
**dadurch gekennzeichnet,**
**dass** die Fasern aufweisenden Gegenstände ausgewählt sind aus Polstern, Teppichen, Teppichböden, Matratzen, Federbetten, Schutzbezügen, Decken, Industrietextilien oder Kleidungsstücken.

5. Verfahren gemäß zumindest einem der Ansprüche 1 bis 4,
**dadurch gekennzeichnet,**
**dass** die selbstreinigende Oberfläche durch Aufbringen von Partikeln auf zumindest eine Oberfläche der Gegenstände hergestellt wird.

6. Verfahren gemäß Anspruch 5,
**dadurch gekennzeichnet,**
**dass** die selbstreinigende Oberfläche durch Aufbringen einer Suspension, die Partikel in einem Lösemittel aufweist, und anschließendes Entfernen des Lösemittels aufgebracht wird.

7. Verfahren gemäß Anspruch 6,
**dadurch gekennzeichnet,**
**dass** das Aufbringen der Suspension auf zumindest eine Oberfläche eines Gegenstandes durch Tauchen des Gegenstandes in die Suspension erfolgt.

8. Verfahren gemäß Anspruch 6,
**dadurch gekennzeichnet,**
**dass** das Aufbringen der Suspension auf zumindest eine Oberfläche eines Gegenstandes durch Aufsprühen der Suspension auf den Gegenstand erfolgt.

9. Verfahren gemäß zumindest einem der Ansprüche 6 bis 8,
**dadurch gekennzeichnet,**
**dass** die Oberfläche des Gegenstandes durch das Lösemittel nicht angelöst wird, und nach dem Entfernen des Lösemittels die Partikel an der Oberfläche des Gegenstandes haften.

10. Verfahren nach Anspruch 9,
**dadurch gekennzeichnet,**
**dass** als Lösemittel zumindest eine geeignete Verbindung, die die Oberfläche des zu beschichtenden Gegenstands nicht anlöst, aus der Gruppe der Alkohole, der Glykole, der Ether, der Glykolether, der Ketone, der Ester, der Amide, der Nitro-Verbindungen, der Halogenkohlenwasserstoffe, der aliphatischen und aromatischen Kohlenwasserstoffe oder eine Mischung davon eingesetzt wird.

11. Verfahren gemäß zumindest einem der Ansprüche 6 bis 8,
**dadurch gekennzeichnet,**
**dass** die Oberfläche des Gegenstandes durch das Lösemittel angelöst wird, und nach dem Entfernen des Lösemittels die Beschichtung in der Oberfläche des Gegenstandes verankert ist.

12. Verfahren gemäß Anspruch 8,
**dadurch gekennzeichnet,**
**dass** die Oberfläche, die von einem Lösemittel angelöst wird, Polymere auf der Basis von Polycarbonaten, Poly(meth)acrylaten, Polyamiden, PVC, Polyethylenen, Polypropylenen, aliphatischen linearen- oder verzweigten Alkenen, cyclischen Alkenen, Polystyrolen, Polyestern, Polyethersulfonen, Polyacrylnitril oder Polyalkylenterephthalaten, sowie deren Gemische oder Copolymere, aufweist.

13. Verfahren nach einem der Ansprüche 7 oder 8,
**dadurch gekennzeichnet,**
**dass** als Lösemittel zumindest eine als Lösemittel für die entsprechende Oberfläche geeignete Verbindung aus der Gruppe der Alkohole, der Glykole, der Ether, der Glykolether, der Ketone, der Ester, der Amide, der Nitro-Verbindungen, der Halogenkohlenwasserstoffe, der aliphatischen und aromatischen Kohlenwasserstoffe oder Mischungen davon eingesetzt wird.

14. Verfahren nach Anspruch 10,
**dadurch gekennzeichnet,**
**dass** als Lösemittel zumindest eine als Lösemittel für die entsprechende Oberfläche geeignete Verbindung ausgewählt aus Methanol, Ethanol, Propanol, Butanol, Octanol, Cyclohexanol, Phenol, Kresol, Ethylenglykol, Diethylenglykol, Diethylether, Dibutylether, Anisol, Dioxan, Dioxolan, Tetrahydrofuran, Monoethylenglykolether, Diethylenglykolether, Triethylenglykolether, Polyethylenglykolether, Aceton, Butanon, Cyclohexanon, Ethylacetat, Butylacetat, Iso-Amylacetat, Ethylhexylacetat, Glykolester, Dimethylformamid, Pyridin, N-Methylpyrrolidon, N-Methylcaprolacton, Acetonitril, Schwefelkohlenstoff, Dimethylsulfoxid, Sulfolan, Nitrobenzol, Dichlormethan, Chloroform, Tetrachlormethan, Trichlorethen, Tetrachlorethen, 1,2-Dichlorethan, Chlorphenol, Chlorfluorkohlenwasserstoffe, Benzine, Petrolether, Cyclohexan, Methylcyclohexan, Decalin, Tetralin, Terpene, Benzol, Toluol oder Xylol oder Mischungen davon eingesetzt wird.

15. Verfahren gemäß zumindest einem der Ansprüche 1 bis 11,
**dadurch gekennzeichnet,**
**dass** das Lösemittel, welches die hydrophobe Kieselsäure aufweist, vor dem Aufbringen auf die Oberfläche eine Temperatur von - 30 °C bis 300 °C, bevorzugt 25 bis 100 °C, aufweist.

16. Verfahren nach mindestens einem der Ansprüche 1 bis 12,
**dadurch gekennzeichnet,**
**dass** die Partikel eine mittlere Partikelgröße von 0,02 bis 100 µm.

17. Verfahren gemäß Anspruch 13,
**dadurch gekennzeichnet,**
**dass** die Partikel eine mittlere Partikelgröße von 30 nm bis 1 µm aufweisen.

18. Verwendung des Verfahren gemäß zumindest einem der Ansprüche 1 bis 17 zur Herstellung von antiallergischen Oberflächen bei Teppichböden, Schutzfolien für Möbel, Matratzen, Federbetten, Tapeten, Schutzbezüge oder Decken.

19. Teppichböden,
**dadurch gekennzeichnet,**
**dass** sie eine antiallergische Oberfläche, hergestellt nach einem Verfahren gemäß zumindest einem der Ansprüche 1 bis 17, aufweisen.

20. Schutzfolien für Möbel,
**dadurch gekennzeichnet,**
**dass** sie eine antiallergische Oberfläche, hergestellt nach einem Verfahren gemäß zumindest einem der Ansprüche 1 bis 17, aufweisen.

21. Matratzen,
**dadurch gekennzeichnet,**
**dass** sie eine antiallergische Oberfläche, hergestellt nach einem Verfahren gemäß zumindest einem der Ansprüche 1 bis 17, aufweisen.

22. Federbetten,
**dadurch gekennzeichnet,**
**dass** sie eine antiallergische Oberfläche, hergestellt nach einem Verfahren gemäß zumindest einem der Ansprüche 1 bis 17, aufweisen.

23. Tapeten,
**dadurch gekennzeichnet,**
**dass** sie eine antiallergische Oberfläche, hergestellt nach einem Verfahren gemäß zumindest einem der Ansprüche 1 bis 17, aufweisen.

24. Schutzbezüge,
**dadurch gekennzeichnet,**
**dass** sie eine antiallergische Oberfläche, hergestellt nach einem Verfahren gemäß zumindest einem der Ansprüche 1 bis 17, aurweisen.

25. Decken,
**dadurch gekennzeichnet,**
**dass** sie eine antiallergische Oberfläche, hergestellt nach einem Verfahren gemäß zumindest einem der Ansprüche 1 bis 17, aufweisen.

26. Textilien,
**dadurch gekennzeichnet,**
**dass** sie eine antiallergische Oberfläche, hergestellt nach einem Verfahren gemäß zumindest einem der Ansprüche 1 bis 17, aufweisen.

27. Gegenstände,
**dadurch gekennzeichnet,**
**dass** sie eine antiallergische Oberfläche, hergestellt nach einem Verfahren gemäß zumindest einem der Ansprüche 1 bis 17, aulweisen.
